(19) Europäisches Patentamt
European Patent Office
Office européen des brevets

(11) Veröffentlichungsnummer: **0 604 814 A1**

(12) # EUROPÄISCHE PATENTANMELDUNG

(21) Anmeldenummer: **93120058.8**

(22) Anmeldetag: **13.12.93**

(51) Int. Cl.[5]: **C08G 63/91**, C08G 18/46, C09D 175/06

(30) Priorität: **24.12.92 DE 4244030**

(43) Veröffentlichungstag der Anmeldung: **06.07.94 Patentblatt 94/27**

(84) Benannte Vertragsstaaten: **AT BE CH DE ES FR GB IT LI NL SE**

(71) Anmelder: **BAYER AG**

**D-51368 Leverkusen(DE)**

(72) Erfinder: **Wamprecht, Christian, Dr.**
**Regattastrasse 20**
**D-41472 Neuss(DE)**
Erfinder: **Zwiener, Christian, Dr.**
**Hittorfstrasse 9**
**D-50735 Köln(DE)**
Erfinder: **Henning, Wolfgang, Dr.**
**Supreme Mikage App. 101 3-18-1,**
**Mikageyamate**
**Higashimada-Ku, Kobe Pref. Hyogo(JP)**
Erfinder: **Petzoldt, Joachim, Dr.**
**Reitherbach 6**
**D-40764 Langenfeld(DE)**
Erfinder: **Pedain, Josef, Dr.**
**Haferkamp 6**
**D-51061 Köln(DE)**
Erfinder: **Meixner, Jürgen, Dr.**
**Josef-Brocker-Dyk 56**
**D-47803 Krefeld(DE)**

(54) **Aminogruppen aufweisende Polyesterharze.**

(57) Ein Verfahren zur Herstellung von Aminogruppen und gegebenenfalls Hydroxylgruppen aufweisenden Polyesterharzen durch Anlagerung von Ammoniak und/oder primären Aminen an ungesättigte Polyesterharze, die eingebaute Maleinsäure- und/oder Fumarsäure-Einheiten aufweisen, die nach diesem Verfahren erhältlichen, Aminogruppen und gegebenenfalls Hydroxylgruppen aufweisenden Polyesterharze und ihre Verwendung als Bindemittelkomponente in Zweikomponenten-Polyurethanlacken, insbesondere zur Beschichtung von Kunststoff-ormteilen.

EP 0 604 814 A1

Die Erfindung betrifft ein neues Verfahren zur Herstellung von Amino- und ggf. Hydroxylgruppen aufweisenden Polyesterharzen, die nach diesem Verfahren erhältlichen Harze und ihre Verwendung als Bindemittelkomponente in Zweikomponenten-Polyurethanlacken.

Zweikomponenten-Polyurethan-Beschichtungsmittel sind seit langem bekannt. Sie eignen sich zur Herstellung von hochwertigen Überzügen, die hart, elastisch, abrieb- und lösungsmittelbeständig und vor allem auch witterungsstabil eingestellt werden können. Die chemischen Grundlagen dieser Lacke und Überzüge werden u.a. in "Lackkunstharze", Hans-Wagner/Hans Friedrich Sarx, Carl Hanser Verlag, München, Seiten 153 bis 173 (1971), beschrieben. Die als Harzkomponente beschriebenen Polyester tragen nahezu ausschließlich Hydroxylgruppen, die mit den als Härter verwendeten Polyisocyanaten zu Polyurethanen reagieren.

Die Reaktion zwischen den OH- und NCO-Gruppen verläuft bei Raumtemperatur so langsam, daß eine wirtschaftliche, d.h. schnelle Trocknung nur unter Anwendung erhöhter Temperaturen möglich ist. Die relativ langsame Reaktion bei Raumtemperatur kann zwar durch Katalysatoren beschleunigt werden, jedoch verschlechtert sich hierbei z.B. die Härte des resultierenden Lacks (S. Günther, Ind. Lackierbetr. 57 (1989) Nr. 5, S. 167).

Die Überlegung, die sehr viel schnellere Reaktion zwischen aliphatischen Aminen und Isocyanaten auszunutzen, konnte lange Zeit wegen der extrem hohen Reaktionsgeschwindigkeit, die eine kontrollierte Umsetzung verhindert, nicht in befriedigender Weise realisiert werden. Die reaktionsträgeren aromatischen Amine können wegen ihrer starken Vergilbungsneigung nicht für Decklacke eingesetzt werden.

In der EP-A 0 403 921 wird ein Vorfahren beschrieben, wie auf einfache Weise die zu hohe Reaktivität der aliphatischen Amine erniedrigt werden kann. Es handelt sich hierbei um die Addition von primären Aminen an Maleinsäureester, wobei sekundäre Aminogruppen erhalten werden, die im Beschichtungssystem mit Isocyanatgruppen reagieren. Im Mittelpunkt des Interesses des vorbeschriebenen Verfahrens stand die Bereitstellung von niedermolekularen und niedrigviskosen aminischen Kettenverlängerungsmitteln für Zweikomponenten-Polyurethanlacke.

Wie jetzt gefunden wurde, stellen höhermolekulare Polyesterharze, die neben gegebenenfalls vorliegenden alkoholischen Hydroxylgruppen einen leicht einstell- und kontrollierbaren Gehalt an primären oder sekundären, in ∝-Stellung zu den Estergruppen eingebaute Aminogruppen aufweisen besonders wertvolle Bindemittelkomponenten für Zweikomponenten-Polyurethanlacke dar. Die Herstellung dieser Aminogruppen aufweisenden Polyesterharze erfolgt durch Anlagerung von Ammoniak oder von primären Monoaminen an olefinisch ungesättigte Struktureinheiten aufweisende Polyesterharze der nachstehend näher beschriebenen Art unter Ausbildung von primären bzw. sekundären Aminogruppen.

Die Herstellung von Aminogruppen aufweisenden Polyesterharzen durch Anlagerung von Aminen an ungesättigte Polyesterpolyole ist zwar aus der EP-A-0 273 243 bereits bekannt, jedoch handelt es sich bei den dort als Ausgangsmaterial genannten Aminen um zwei primäre Aminogruppen aufweisende Diamine, so daß Verfahrensprodukte entstehen, die sich von den nachstehend näher beschriebenen erfindungsgemäßen Verfahrensprodukten insbesondere durch das Vorliegen von primären Aminogruppen unterscheiden, die nicht in ∝-Stellung zu den Estergruppen angeordnet sind (in den Beispielen als "basischer Stickstoff" bezeichnet), und die daher eine mit den in den erfindungsgemäßen Verfahrensprodukten vorliegenden Aminogruppen nicht mehr vergleichbare, d.h. wesentlich höhere Reaktivität gegenüber der Isocyanatgruppen aufweisen. Die Verfahrensprodukte der Veröffentlichung werden im übrigen nicht als Bindemittelkomponente für Zweikomponenten-Polyurethanlacke sondern zur Herstellung von Kleb- bzw. Schaumstoffen empfohlen.

Gegenstand der Erfindung ist ein Verfahren zur Herstellung von Aminogruppen und ggf. Hydroxylgruppen aufweisenden Polyesterharzen mit einem Gehalt an Hydroxylgruppen von 0 bis 10 Gew.-% und einem Gehalt an Stickstoff (berechnet als N = 14) in Form von primären und/oder sekundären Aminogruppen von 0,01 bis 9, vorzugsweise 0,05 bis 2 Gew.-%, dadurch gekennzeichnet, daß man ungesättigte, pro Molekül im statistischen Mittel insgesamt mindestens 2 Struktureinheiten der Formel

$$-O-\overset{\overset{\displaystyle O}{\|}}{C}-CH=CH-\overset{\overset{\displaystyle O}{\|}}{C}-O-$$

und ggf. alkoholische Hydroxylgruppen aufweisende Polyesterharze des Molekulargewichtsbereichs Mn 286 bis 10.000 bei 0 bis 120 °C mit Ammoniak oder primären Monoaminen der Formel

R-$NH_2$

im Sinne einer Additionsreaktion zur Reaktion bringt, wobei
R für einen gegebenenfalls Ethersauerstoffatome aufweisenden und/oder Hydroxylgruppen aufweisenden aliphatischen, cycloaliphatischen oder araliphatischen Rest steht.

Gegenstand der Erfindung sind auch die nach diesem Verfahren erhältlichen Aminogruppen und ggf. Hydroxylgruppen aufweisenden Polyesterharze.

Gegenstand der Erfindung ist auch die Verwendung der nach diesem Verfahren erhältlichen Polyesterharze als Bindmittelkomponente in Zweikomponenten-Polyurethanlacken, insbesondere zur Beschichtung von Kunststoffformkörpern.

Die beim erfindungsgemäßen Verfahren eingesetzten, olefinisch ungesättigten Polyesterharze weisen im allgemeinen Säurezahlen von unter 10, vorzugsweise von unter 3 mgKOH/g, Hydroxylzahlen von 0 bis 325, vorzugsweise 0 bis 230 mgKOH/g, entsprechend einem Hydroxylgruppengehalt von 0 bis 10, vorzugsweise 0 bis 7 Gew.-%, ein aus der Stöchiometrie der bei ihrer Herstellung eingesetzten Ausgangsmaterialien errechenbares Molekulargewicht Mn von 286 bis 10.000, vorzugsweise 488 bis 8.000 und im statistischen Mittel mindestens 2, vorzugsweise mindestens 3 Struktureinheiten der Formel

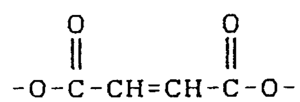

auf.

Die bevorzugte Art der Herstellung dieser ungesättigten Polyesterharze besteht in einer an sich bekannten Veresterungsreaktion

a) einer Polycarbonsäure-Komponente, bestehend aus Maleinsäure, Maleinsäureanhydrid und/oder Fumarsäure, sowie gegebenenfalls bis 95 Carboxyläquivalent-%, bezogen auf die Gesamtmenge der Komponente (a) an anderen Polycarbonsäuren des Molekulargewichtsbereichs 118 bis 1.000, vorzugsweise 118 bis 400 und/oder an Anhydriden derartiger Säuren

mit

b) einer Polyolkomponente einer (mittleren) maximalen Hydroxylfunktionalität von 3, bestehend aus mindestens einem mehrwertigen Alkohol des Molekulargewichtsbereichs 62 bis 400

gegebenenfalls unter Mitverwendung von

c) einer Monocarbonsäure-Komponente in einer Menge von bis zu 50 Carboxyläquivalent-%, bezogen auf die Gesamtmenge der Komponenten a) und c), bestehend aus mindestens einer Monocarbonsäure des Molekulargewichtsbereichs 60 bis 400 und/oder mindestens einem Anhydrid einer derartigen Monocarbonsäure,

und/oder ggf. unter Mitverwendung von

d) einer einwertigen Alkoholkomponente in einer Menge von bis zu 50 Hydroxyläquivalent-%, bezogen auf die Gesamtmenge der Komponenten b) und d), bestehend aus mindestens einem einwertigen Alkohol des Molekulargewichtsbereichs 32 bis 400

unter Einhaltung eines Äquivalentverhältnisses von Carboxylgruppen zu Hydroxylgruppen von 1:1,5 bis 1:1 bis zum Erreichen einer unter 10 mgKOH/g liegenden Säurezahl hergestellt worden sind.

Geeignete andere Polycarbonsäuren bzw. Polycarbonsäureanhydride a) als die oben genannten sind beispielsweise Bernsteinsäure, Glutarsäure, Adipinsäure, Isophthalsäure, Phthalsäure, Terephthalsäure, Phthalsäureanhydrid, Tetrahydrophthalsäure, Tetrahydrophthalsäureanhydrid, Hexahydrophthalsäure, Hexahydrophthalsäureanhydrid, Trimesinsäure, Trimellitsäure, handelsübliche Dimer- oder Trimerfettsäuren oder Trimellitsäureanhydrid. Besonders bevorzugt wird Adipinsäure als Saure a) mitverwendet.

Als mehrwertige Alkohole, die die Komponente b) bilden oder Teil der Komponente b) sind, kommen beispielsweise Ethylenglykol, Propandiol-1,2 und -1,3, Butandiol-1,2 und -1,4, Pentandiol-1,5, Hexandiol-1,6, Neopentylglykol (2,2-Dimethyl-propandiol-1,3), 1,4-Bis-(hydroxymethyl)-cyclohexan, Cyclohexandiol-1,2 und -1,4, 2,2-Bis-(4-hydroxycyclohexyl)-propan, Octahydro-4,7-methano-1Hindendimethanol, Trimethylolpropan, Glycerin und/oder Pentaerythrit in Betracht.

Bei den ggf. mitzuverwendenden Monocarbonsäuren oder Monocarbonsäuren c) handelt es sich beispielsweise um Essigsäure, Propionsäure, n-Octancarbonsäure, 2-Ethyl-hexansäure, Stearinsäure, Benzoesäure, die ggf. existierenden Anhydride solcher Säuren oder um Gemische derartiger Monocarbonsäuren bzw. Monocarbonsäure-Anhydride. Auch olefinisch ungesättigte Monocarbonsäuren wie beispielsweise Acrylsäure oder Methacrylsäure, sowie ungesättigte Fettsäuren bzw. deren Gemische, wie Sojaöl- oder

dehydratisierte Rizinusölfettsäure können als oder als Teil der Komponente c) beim erfindungsgemäßen Verfahren mitverwendet werden. In speziellen Fällen ist auch der Einsatz hydroxyfunktioneller Carbonsäuren wie der hydrierten Rizinusölfettsäure oder von Hydroxybenzoesäure und/oder der Einsatz von Lactonen wie insbesondere ε-Caprolacton denkbar.

Bei der ggf. ebenfalls mitverwendbaren Alkoholkomponente d) handelt es sich um einwertige Alkohole wie beispielsweise Methanol, Ethanol, die isomeren Propanole, Butanole, Hexanole, Cyclohexanol, Benzylalkohol, Fettalkohole oder beliebige Gemische derartiger Alkohole.

Die Herstellung der ungesättigten Polyesterharze aus den beispielhaft genannten Ausgangsmaterialien erfolgt in an sich bekannter Weise nach Methoden wie sie beispielsweise in "Ullmanns Encyclopädie der technischen Chemie", Verlag Chemie Weinheim, 4. Auflage (1980), Band 19, Seiten 61 ff. oder von H. Wagner und H.F. Sarx in "Lackkunstharze", Carl Hanser Verlag, München (1971), Seiten 85 ff oder von G. Gerber und H. Gruber in "Houben-Weyl", Methoden der organischen Chemie, Bd. E 20, Tl 2, S. 1405 ff oder von R. Dhein, D. Reuter und G. Ruf, dito, S. 1429 ff ausführlich beschrieben sind. Die Veresterung erfolgt ggf. in Gegenwart einer katalytischen Menge eines üblichen Veresterungskatalysators, wie z.B. Säuren, Basen oder Übergangsmetallverbindungen, wie z.B. Titantetrabutylat bei ca. 80 bis 260 °C, vorzugsweise 100 bis 230 °C. Die Veresterungsreaktion wird so lange durchgeführt, bis die angestrebten Werte für die Hydroxyl- und Säurezahl erreicht sind. Im übrigen werden Art und Mengenverhältnisse der eingesetzten Komponenten a) bis d) so gewählt, daß die Polyester den oben beschriebenen Kenndaten entsprechen.

Das Äquivalentverhältnis von Carboxylgruppen zu Hydroxylgruppen liegt im allgemeinen bei 1:1,5 bis 1:1, vorzugsweise 1:1,3 bis 1:1. Anhydridgruppen entsprechen hierbei 2 Carboxylgruppen und gehen als solche in die Berechnung ein.

Die Herstellung der ungesättigten Polyesterharze kann auch, allerdings weniger bevorzugt, nach dem Prinzip der Umesterung unter Verwendung von Estern auf Basis von Polycarbonsäuren der beispielhaft genannten Art und einwertigen, leicht flüchtigen Alkoholen in Kombination mit Polyhydroxylverbindungen der beispielhaft genannten Art bzw. unter Verwendung von Estern auf Basis von einwertigen, leicht flüchtigen Carbonsäuren und Polyhydroxylverbindungen der beispielhaft genannten Art in Kombination mit Polycarbonsäuren der oben beispielhaft genannten Art unter Abspaltung des leicht flüchtigen Alkohols bzw. der leicht flüchtigen Säure erfolgen. Diese Art der Herstellung der Polyesterharze ist jedoch weniger bevorzugt.

Die nach einer dieser Methode hergestellten, olefinisch ungesättigten Polyesterharze werden bei der Durchführung des erfindungsgemäßen Verfahrens mit Ammoniak oder primären Aminen der Formel

$R-NH_2$

umgesetzt.

In dieser Formel hat R die bereits oben angegebene Bedeutung. Vorzugsweise handelt es sich bei R um einen, gegebenenfalls mindestens eine alkoholische Hydroxylgruppe aufweisenden aliphatischen oder cycloaliphatischen Kohlenwasserstoffrest mit bis zu 15 Kohlenstoffatomen. Besonders bevorzugt werden als Reaktionspartner für die ungesättigten Polyesterharze solche primären, der gemachten Definition entsprechende Monoamine eingesetzt, bei denen die primäre Aminogruppe an ein sekundäres oder tertiäres Kohlenstoffatom gebunden ist.

Geeignete Amine der zuletzt genannten allgemeinen Formel sind beispielsweise Methylamin, Ethylamin, 1-Aminopropan, 2-Aminopropan, 1-Aminobutan, 2-Aminobutan, 1-Amino-2-methylpropan, 2-Amino-2-methylpropan, 2-Amino-2-methylbutan, 1-Aminohexan, 1-Amino-2-ethylhexan, 1-Aminodecan, 1-Aminododecan, 1-Aminotetradecan, 1-Amino-hexadecan, 1-Aminooctadecan, Allylamin, Cyclohexylamin, 2-, 3- oder 4-Methylcyclohexylamin, Aminomethylcyclohexan, 3,3,5-Trimethylcyclohexylamin, 1-Aminomethyl-3- oder 4-methyl-3-cyclohexen, Benzylamin, Cyclopentylamin, Cyclooctylamin, Cyclopropylamin, Cycloheptylamin, Cyclobutylamin, Cyclododecylamin, 1-Aminoindan, 2-Aminoethanol, 2-Methoxyethylamin, 3-Amino-1-propanol, 3-Methoxy-1-propylamin, 3-Ethoxy-1-propylamin, 3((-2-Ethylhexyl)oxy)1-propylamin, 1-Amino-2-propanol, 2-Amino-1-butanol, 2-Amino-2-methylpropanol, 2-Amino-2-methyl-1,3-propandiol oder 2-Amino-2-hydroxymethyl-1,3-propandiol.

Die Anlagerung von Ammoniak oder primären Aminen der allgemeinen Formel

$R-NH_2$

an die ungesättigten Polyesterharze führt zur Ausbildung von Struktureinheiten der Formel

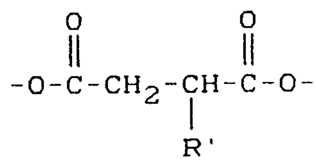

(R' = $-NH_2$ oder -NHR).

Art und Mengenverhältnisse der miteinander umgesetzten Reaktionspartner werden dabei so gewählt, daß Amino- und gegebenenfalls Hydroxylgruppen aufweisende Polyesterharze mit den bereits obengenannten Kenndaten resultieren. Bei der Anlagerung von Ammoniak oder bei Raumtemperatur gasförmigen Aminen erfolgt oftmals der Einsatz von überschüssigen Mengen der Base (Einleiten und anschließendes Abziehen des nicht umgesetzten Überschusses im Vakuum und/oder durch Einleiten von Inertgas), während bei der Verwendung von bei Raumtemperatur flüssigen Aminen $R-NH_2$ das Äqivalentverhältnis von primären Aminogruppen zu Struktureinheiten der Formel

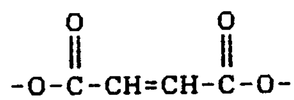

in weiten Bereichen wie z.B. 0,05:1 bis 1:1 schwanken kann. Vorzugsweise liegt das genannte Äquivalentverhältnis bei 0,1:1 bis 1:1, insbesondere bei 0,1:1 bis 0,6:1.

Die Umsetzung erfolgt im allgemeinen innerhalb des Temperaturbereichs von 0 bis 120 ° C, vorzugsweise 20 bis 100 ° C. Die Umsetzung kann, je nach Viskosität der ungesättigten Polyester in Substanz oder in Gegenwart geeigneter Lösungsmittel erfolgen. Geeignete Lösungsmittel sind beispielsweise Toluol, Xylol, höhere Alkylbenzole, Ester wie Ethylacetat, n-Butylacetat, Methylglykolacetat, Ethylglykolacetat, Methoxybutylacetat, Ketone wie Methylethylketon oder Methylisobutylketon oder Gemische derartiger Lösungsmittel.

Wie bereits ausgeführt, entstehen bei der erfindungsgemäßen Umsetzung Struktureinheiten der Formel

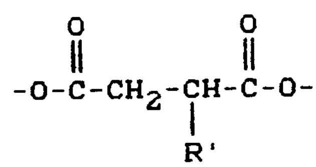

(R' = $-NH_2$ oder -NHR).

Die Reaktivität der Aminogruppe R' ist in dieser Formel durch Elektronenzug im Vergleich zu entsprechenden, elektronisch nicht gehinderten Aminogruppen stark reduziert.

Eine Variationsmöglichkeit bezüglich der Reaktivität der erfindungsgemäßen Verfahrensprodukte besteht in einer Variation des Verhältnisses von eingebauten Hydroxylgruppen zu eingebauten Aminogruppen durch geeignete Wahl der beim erfindungsgemäßen Verfahren eingesetzten Ausgangsmaterialien und ihrer Mengenverhältnisse.

Die erfindungsgemäßen Verfahrensprodukte stellen im allgemeinen je nach Molekulargewicht niedrig- bis hochviskose, fast farblose, klare Harze dar, die in Lacklösungsmitteln der bereits beispielhaft genannten Art klar löslich sind.

Bei der erfindungsgemäßen Verwendung der erfindungsgemäßen Verfahrensprodukte können diese in Abmischung mit unterschiedlichen Mengen an anderen, gegenüber Isocyanatgruppen reaktionsfähigen Verbindungen, insbesondere der an sich bekannten Polyester- oder Polyacrylatpolyole mit einem Hydroxylgruppengehalt von 0,5 bis 10, vorzugsweise 1 bis 5 Gew.-% zum Einsatz gelangen. Auch hier liegt eine weitere Möglichkeit der Steuerung der Reaktivität der Lackkomponente mit gegenüber Isocyanatgruppen reaktionsfähigen Gruppen Im allgemeinen wird bei der erfindungsgemäßen Verwendung als gegenüber Isocyanatgruppen reaktionsfähige Komponente eine solche verwendet, in denen auf jede primäre oder sekundäre Aminogruppe bis zu 20 Hydroxylgruppen entfallen. Vorzugsweise liegt das Verhältnis von (i) primären und/oder sekundären Aminogruppen zu (ii) Hydroxylgruppen in der Bindemittelkomponente mit gegenüber Isocyanatgruppen reaktionsfähige Gruppen bei 10:1 bis 1:10. Der Anteil an erfindungsgemäßen

Verfahrensprodukten in diesen Gemischen liegt vorzugsweise bei 10 bis 100 Gew.-%. Besonders bevorzugt werden die erfindungsgemäßen Verfahrensprodukte als alleinige, gegenüber Isocyanatgruppen reaktionsfähige Lackkomponente eingesetzt.

Reaktionspartner für die "Polyol-Komponente" bei der erfindungsgemäßen Verwendung der erfindungsgemäßen Polyesterharze sind die üblichen "Lackpolyisocyanate", d.h. vor allem die bekannten Urethangruppen, Uretdiongruppen oder insbesondere Biuretgruppen bzw. Isocyanuratgruppen aufweisenden Modifizierungsprodukte von einfachen Diisocyanaten, wie z.B. 1,6-Diisocyanatohexan, 1-Isocyanato-3,3,5-trimethyl-5-isocyanatmethylcyclohexan (Isophorondiisocyanat), 4,4-Diisocyanatodicyclohexylmethan, 2,4- und 2,6-Diisocyanatotoluol. Besonders bevorzugt werden die entsprechenden "Lackpolyisocyanate" mit aliphatisch und/oder cycloaliphatisch gebundenen Isocyanatgruppen eingesetzt.

Zu den Urethangruppen aufweisenden "Lackpolyisocyanaten" gehören insbesondere die Umsetzungsprodukte von 2,4- und ggf. 2,6-Diisocyanatotoluol mit unterschüssigen Mengen an Trimethylolpropan bzw. dessen Gemischen mit einfachen Diolen, wie z.B. den isomeren Propan- oder Butandiolen. Die Herstellung derartiger, Urethangruppen aufweisender Lackpolyisocyanate in praktisch monomerenfreier Form ist beispielsweise in DE-PS 1 090 196 beschrieben.

Zu den Uretdiongruppen aufweisenden Lackpolyisocyanaten gehören insbesondere jene auf Basis von 1,6-Diisocyanatohexan, deren Herstellung beispielsweise in EP-A-0 377 177 beschrieben ist.

Zu den Biuretgruppen aufweisenden Lackpolyisocyanaten, die bei der erfindungsgemäßen Verwendung bevorzugt sind, gehören insbesondere jene auf Basis von 1,6-Diisocyanatohexan, deren Herstellung beispielsweise in EP-Bl 0 003 505, DE-PS 1 101 394, US-PS 3 358 010 oder US-PS 3 903 127 beschrieben ist.

Zu den ebenfalls bevorzugten Isocyanuratgruppen aufweisenden Polyisocyanaten gehören insbesondere die Isocyanatgruppen aufweisenden Trimerisate bzw. Mischtrimerisate der oben beispielhaft genanten Diisocyanate, wie z.B. die Isocyanatgruppen aufweisenden Polyisocyanate auf Basis von Diisocyanatotoluol gemäß GB-PS 1 060 430, GB-OS 1 506 373 oder GB-PS 1 485 564, die Mischtrimerisate von Diisocyanatotoluolen mit 1,6-Diisocyanatohexan, die beispielsweise gemäß DE-PS 1 644 809 oder DE-OS 3 144 672 zugänglich sind, und insbesondere die aliphatischen bzw. aliphatisch-cycloaliphatischen Trimerisate bzw. Mischtrimerisate auf Basis von 1,6-Diisocyanatohexan und/oder Isophorondiisocyanat, die beispielsweise gemäß US-PS 4 324 879, US-PS 4 288 586, DE-OS 3 100 262, DE-OS 3 100 263, DE-OS 3 033 860 oder DE-OS 3 144 672 zugänglich sind. Die bei der erfindungsgemäßen Verwendung zum Einsatz gelangenden Lackpolyisocyanate weisen im allgemeinen einen Isocyanatgehalt von 5 bis 25 Gew.-% und einen Restgehalt an, zu ihrer Herstellung eingesetzten, monomeren Diisocyanaten von vorzugsweise unter 2 Gew.-% auf. Selbstverständlich können auch beliebige Gemische der beispielhaft genannten Lackpolyisocyanate zum Einsatz gelangen.

In den Zweikomponenten-Polyurethanlacken unter erfindungsgemäßer Verwendung bzw. Mitverwendung der erfindungsgemäßen Verfahrensprodukte als Bindemittelkomponente liegt das Äquivalentverhältnis von Isocyanatgruppen zu gegenüber Isocyanatgruppen reaktionsfähigen Gruppen bei 5:1 bis 1:2, vorzugsweise 1,5:1 bis 1:1,2.

Die durch Vermischen der Bindemittelkomponenten erhaltenen Zweikomponenten-Bindemittel haben nur eine begrenzte Verarbeitungszeit von ca. 0,5 bis 8 Stunden und können zur Herstellung von Klarlacken oder von pigmentierten Lacken, gegebenenfalls unter Mitverwendung der üblichen Hilfs- und Zusatzmittel verwendet werden. Diese ggf. mitzuverwendenden Hilfs- und Zusatzmittel können entweder dem Gemisch oder den Einzelkomponenten vor deren Durchmischung hinzugefügt werden.

Als Hilfs- und Zusatzmittel kommen beispielsweise Lösungsmittel der bereits oben beispielhaft genannten Art in Betracht.

Weitere, ggf. mitzuverwendende Hilfs- und Zusatzmittel sind z.B. Weichmacher wie z.B. Trikresylphosphat oder Phthalsäurediester, Chlorparaffine, Pigmente und Füllstoffe, wie Titandioxid, Bariumsulfat, Kreide, Ruß; Katalysatoren wie z.B. N,N-Dimethylbenzylamin, N-Methylmorpholin, Zinkoctoat, Zinnoctoat oder Dibutylzinndilaurat; Verlaufsmittel; Verdickungsmittel, ggf. Stabilisdtoren, wie substituierte Phenole, organofunktionelle Silane als Haftvermittler sowie Lichtschutzmittel. Derartige Lichtschutzmittel sind beispielsweise sterisch gehinderte Amine, wie sie z.B. in DE-OS 2 417 353 (= US-PS 4 123 418 und US-PS 4 110 304) und DE-OS 2 456 864 (= US-PS 3 993 655 und US-PS 4 221 701) beschrieben sind. Besonders bevorzugte Verbindungen sind: Bis(1,2,2,6,6-pentamethylpiperidyl-4)-sebacat, Bis-(2,2,6,6-tetramethylpiperidyl-4)-sebacat, n-Butyl-(3,5-di-tert.-butyl-4-hydroxybenzyl)-malonsäure-bis-(1,2,2,6,6-pentamethylpiperidyl-4)-ester.

Die den Füllstoffen und Pigmenten anhaftende Feuchtigkeit kann durch vorhergehende Trocknung oder durch Mitverwendung von wasseraufnehmenden Stoffe, wie z.B. Molekularsieb-Zeolith, entfernt werden.

Die Trocknung der bei der erfindungsgemäßen Verwendung resultierenden Lackfilme kann bei Raumtempertur erfolgen und bedarf keiner Temperaturerhöhung, um die eingangs erwähnten, optimalen Eigenschaften zu erreichen. Zur weiteren Beschleunigung der Trocknungsreaktion können jedoch erhöhte Temperaturen angewendet werden. Möglich, jedoch weniger bevorzugt sind Trocknungstemperaturen, wie sie unter Einbrennbedingungen herrschen. Dies ist von großer praktischer Bedeutung, da auch bei höheren Temperaturen, wie sie z.B. bei Betriebsstörungen auf Lackieranlagen auftreten können, kein thermischer Abbau der Beschichtungen erfolgt.

Zweikomponenten-Polyurethanlacke, die als wesentliche Bindemittelkomponente erfindungsgemäße Verfahrensprodukte enthalten eignen sich zur Herstellung von Beschichtungsmitteln für beliebige Substrate wie z.B. Metalle, Kunststoffe, Holz oder Glas.

Wegen der gleichermaßen guten Eignung der erfindungsgemäßen Lacke für Kunststoffe und Metalle eignen sich diese insbesondere auch hervorragend zur Lackierung von Konstruktionen wie z.B. Außenteilen von Automobilen, die in moderner Gemischtbauweise aus Kunststoff- und Metallteilen hergestellt werden. Die besonderen Vorteile der erfindungsgemäß zum Einsatz gelangenden Lacke begünstigen diese "online"-Lackierung von Automobilaußenteilen, da die Härtung der Lackfilme bereits bei niedrigen Temperaturen erfolgen kann, so daß die Kunststoffe keiner übermäßigen Temperaturbelastung ausgesetzt werden, und da die resultierenden Lackfilme eine ausgezeichnete Witterungsbeständigkeit und Elastizität aufweisen, so daß dekorative Lackierungen für eine lange Zeitdauer unverändert erhalten bleiben und Beanspruchungen durch Stoß oder Schlag schadlos überstehen. Hervorzuheben ist in diesem Zusammenhang insbesondere auch die ausgezeichnete Steinschlagfestigkeit von erfindungsgemäß hergestellten Automobil-Decklackierungen. Die mit den erfindungsgemäß zum Einsatz gelangenden Zweikomponenten-Lacken erhaltenen Lackfilme erfüllen in optimaler Weise an sich gegensätzliche Forderungen nämlich eine ausgezeichnete Tieftemperatur-Elastizität bei gleichzeitig hervorragender Resistenz gegen Lösemittel und Teerflecken sowie hoher Glanzhaltung und Vergilbungsbeständigkeit bei Bestrahlung mit Licht niedriger Wellenlänge, z.B. kurzwelliges UV-Licht.

Die erfindungsgemäß zum Einsatz gelangenden Lacke können selbstverständlich nach allen üblichen Methoden der Lacktechnologie, wie z.B. Streichen, Spritzen, Rollen oder Tauchen auf die beschichtenden Substrate aufgetragen werden. Die erfindungsgemäßen Lacke eignen sich sowohl zur Herstellung von Grundierungen als auch zur Herstellung von Zwischenschichten als auch zur Herstellung von Deckschichten auf den zu lackierenden Substraten.

In den nachfolgenden Beispielen beziehen sich alle Prozentangaben auf das Gewicht.

## Beispiele

1. Allgemeine Herstellvorschrift für die ungesättigten Polyestervorstufen:

Die ein- und mehrwertigen Alkohole und die ungesättigte(n) Dicarbonsäure(n)/Anhydrid(e) werden in einen Reaktor, der mit Rührer, Heizung, automatischer Temperatursteuerung, Kolonne und Vorlage ausgerüstet ist, eingewogen und auf 100 bis 150 °C erhitzt, wobei ein Stickstoffstrom durch die inhomogene Rohstoffmischung durchgeleitet wird Nach Zugabe der restlichen Dicarbonsäuren wird das Rohstoffgemisch innerhalb von 4 bis 8 Stunden unter Rühren und Durchleiten von Stickstoff auf 200 °C aufgeheizt. Dabei wird die am Kopf der Kolonne gemessene Temperatur bei maximal 105 °C gehalten. Die Schmelze wird hierbei homogen und klar. Sobald die Kopftemperatur 90 °C unterschreitet, wird die Kolonne entfernt und mit erhöhtem Stickstoffstrom bis zu einer Säurezahl < 3 mg KOH/g Substrat auskondensiert.

Es werden farblose Harze erhalten, die in Methoxypropylacetat bzw. Butylacetat oder Mischungen derselben gelöst werden.

Die Zusammensetzung und die Daten der einzelnen, auf diesem Wege hergestellten Polyester sind in den Beispielen 1 bis 2 angegeben. die gemachten Maßangaben "Mol" beziehen sich, wie aus den Gewichtsangaben in "g" ersichtlich, nicht auf die tatsächliche Anzahl der jeweiligen "Mole", sondern auf das Molverhältnis.

Beispiel 1

| Polyester A | Einwaage |
|---|---|
| 1,0 Mol Hexandiol-1,6 | 526 g |
| 1,0 Mol Trimethylolpropan | 596 g |
| 1,5 Mol Cyclohexandimethanol | 962 g |
| 1,5 Mol Neopentylglykol | 696 g |
| 2,2 Mol Adipinsäure | 1431 g |
| 1,8 Mol Maleinsäureanhydrid | 786 g |

Hydroxylzahl: 145 mg KOH/g
Säurezahl: 0,7 mg KOH/g
Molekulargewicht: 1700

Beispiel 2

| Polyester B | Einwaage |
|---|---|
| 4,00 Mol Hexandiol-1,6 | 1949 g |
| 1,00 Mol Trimethylolpropan | 553 g |
| 0,52 Mol Adipinsäure | 314 g |
| 0,52 Mol Maleinsäureanhydrid | 211 g |
| 2,48 Mol Isophthalsäure | 1701 g |
| 0,48 Mol Phthalsäureanhydrid | 293 g |

Hydroxylzahl: 140 mg KOH/g
Säurezahl: 1,2 mg KOH/g
Molekulargewicht: 1800

2. Allgemeine Herstellvorschrift für die Umsetzung von ungesättigten Polyestern mit primären Aminen

Die Polyesterstufen A und B der Beispiele 1 und 2 werden jeweils in einem 2-1-Vierhalskolben mit Rührer, Thermometer, Rückflußkühler und Tropfrichter, ggf. in einem geeigneten Lösungsmittel gelöst, vorgelegt und auf 60 °C erwärmt. Dann wird das entsprechende primäre Amin in einer Portion zugegeben. Anschließend wird zunächst 2 Stunden hei 60 °C gerührt, dann auf 80 °C erwärmt und so lange gerührt, bis sich titrimetrisch keine primären Aminogruppen mehr nachweisen lassen, bzw. der Festgehalt dem theoretischen Wert der Aminaddition entspricht. Danach wird das Produkt abgekühlt und abgefüllt.

3. Allgemeine Herstellvorschrift für die Umsetzung von ungesättigten Polyestern mit Ammoniak

Die Polyestervorstufen A und B der Beispiele 1 und 2 werden jeweils in einem 2-1-Vierhalskolben mit Rührer, Thermometer, Rückflußkühler und Gaseinleitungsrohr, ggf. in einem geeigneten Lösungsmittel gelöst, vorgelegt. Dann wird bei Raumtemperatur Ammoniak aus einer Stahlflasche über ca. vier Stunden durchgeleitet. Hierbei erwärmt sich das Reaktionsgemisch auf ca. 30 °C. Man läßt ca. vier Stunden bei Raumtemperatur nachrühren und treibt anschließend bei 50 °C nicht umgesetztes Ammoniak mit Stickstoff aus. Danach wird das Produkt abgekühlt und abgefüllt.

Tabelle 1: Erfindungsgemäße Aminopolyester C bis K, Mengenangaben in g

| Beispiel/Aminopolyester | 3/C | 4/D | 5/E | 6/F | 7/G | 8/H | 9/I | 10/J | 11/K |
|---|---|---|---|---|---|---|---|---|---|
| Polyester A | 1200 | 1200 | 1200 | 1200 | 1200 | 1200 | 1200 | | 1200 |
| Polyester B | | | | | | | | 1200 | |
| Butylacetat | 306 | 308 | 310 | 316 | 300 | 314 | 315 | 303 | 519 |
| Cyclohexylamin | 21,1 | 31,8 | 42,4 | 63,6 | | | | | |
| n-Butylamin | | | | | 39,0 | | | | |
| 1-Aminomethyl-3(4)-methyl-3-cyclohexen | | | | | | 53,5 | | 7,2 | |
| 3,3,5-Trimethyl-cyclohexylamin | | | | | | | 60,5 | | |
| Ammoniak | | | | | | | | | 10,7 |
| Festgehalt (%) | 79,8 | 79,5 | 79,3 | 79,1 | 79,6 | 79,7 | 80,2 | 79,4 | 70,0 |
| Viskosität bei 23° C (mPas) | 3975 | 3850 | 3350 | 4080 | 3440 | 3800 | 5960 | 3610 | 7300 |
| NH + OH-Äquivalent-gewicht (g) | 466 | 449 | 439 | 421 | 423 | 444 | 446 | 495 | 447 |
| Aminstickstoff-gehalt (%) | 0,20 | 0,29 | 0,39 | 0,57 | 0,49 | 0,38 | 0,38 | 0,05 | 0,51 |

Beispiel 12 (Verwendung)

Dieses Beispiel beschreibt die Herstellung gebrauchsfertiger Lacke auf Basis der Aminopolyester gemäß Beispiel 3 bis 10 bzw. der Polyester A und B gemäß Beispielen 1 und 2, deren Applikation und die Prüfung der resultierenden Lackfilme.

Zur Beurteilung der allgemeinen Lackeigenschaften wurden Weißlacke hergestellt; dabei wurden Aminopolyester aus den Beispielen 1 bis 10 mit verschiedenen Zusätzen sowie Weißpigmenten versehen und auf einem Schüttelbock ("Red Devil") angerieben.

Anschließend wurde mit einem Lackpolyisocyanat versetzt, wobei ein NCO/NH + OH-Verhältnis von ca. 1,3:1 eingehalten wurde.

Als "Lackpolyisocyanat" diente ein Isocyanuratgruppen haltiges Polyisocyanat auf Basis von 1,6-Diisocyanatohexan (®Desmodur N 3390, Handelsprodukt der Bayer AG), 90%ig gelöst in Butylacetat/Solvent Naphta 100 (Volumenverhältnis = 1:1), NCO-Gehalt der Lösung: 19,4 Gew.-%).

Bezogen auf Festharz (Summe der festen Anteile an Aminopolyester und Polyisocyanat) wurden folgende Anteile an Zusatzstoffen verwendet:

Tabelle 2

| Bestandteile | % fest auf fest |
|---|---|
| Zinkoctoat (10 % in 1-Methoxypropylacetat-2) | 0,2 |
| Siliconöl als Verlaufsmittel (®Baysilon-Lackadditiv OL 17 der Bayer AG; 10 % in 1-Methoxypropylacetat-2) | 0,1 |
| (®Tinuvin 292 (Lichtschutzmittel der Fa. Ciba-Geigy, Basel; 10 % in Xylol) | 1,0 |
| (®Tinuvin 900 (Lichtschutzmittel der Fa. Ciba-Geigy, Basel; 10 % in Xylol) | 1,0 |
| Titandioxid (Rutiltyp; ®Kronos 2160 der Fa. Kronos-Titan, Leverkusen) | 60,0 |
| Mittel der Verhinderung des Absetzens (®Bentone 38 der Fa. Kronos-Titan, Leverkusen; 10%iger Aufschluß in ®Solvesso/®Antiterra U 17:1) | 1,0 |

Als Lösungsmittel wurde ein Gemisch aus Ethylacetat, 1-Methoxypropylacetat-2 und Methylethylketon (1:1:1) verwendet; es wurde verdünnt bis auf einen Gehalt von:
33 % Bindemittel
20 % Pigment
ca. 1 % Additive
ca. 46 % Lösemittel
Die Auslaufzeit (DIN 53211; 4-mm-Düse) betrug ca. 18 Sekunden. Damit sind die Lacke spritzfertig eingestellt.

Die Lacke wurden auf Glasplatten aufgezogen (Schichtdicke ca. 100 µm Naßfilm), 45 Minuten bei 80 ° C getrocknet und 14 Tage bei Raumtemperatur gelagert. Die Trockenfilmdicke betrug ca. 50 µm.

Anschließend wurden die Härte nach König (DIN 53157), der Glanz nach Gardner bei 60 ° C (DIN 67530), die Anlösbarkeit durch verschiedene Lösemittel sowie die Teerbeständigkeit geprüft, wobei die Teerfleckenbeständigkeit der Lacke ein für die Erfindung entscheidendes Prüfkriterium ist.

Ferner wurden die Lacke zur Prüfung der Kälteflexibilität auf zuvor grundierte, 3 mm dicke Kunststoffplatten auf ®Bayflex 91 (Bayer AG, Leverkusen) aufgespritzt; 45 Minuten bei 80 ° C getrocknet und 14 Tage bei Raumtemperatur gelagert; die Trockenfilmdicke betrug ca. 35 µm. Hieraus gefertigte, 2 cm breite und 15 cm lange Streifen wurden bei verschiedenen Temperaturen (Raumtemperatur: 5 ° C, 0 ° C, -5 ° C, ..., -40 ° C) in einer Kältekammer ca. 30 Minuten gelagert und anschließend bei der betreffenden Temperatur in der Kammer um einen 1-inch-Dorn gebogen. Diejenige Temperatur, bei der der Lackfilm reißt, gilt als Kriterium für die Kälteflexibilität. Die aus den Polyestern der Beispiele 1 bis 10 hergestellten Lacke entsprachen danach hohen Anforderungen an die Elastizität auch bei tiefen Temperaturen.

In Tabelle 3 sind die Prüfergebnisse der Lackfilme, basierend auf den erfindungsgemäßen Aminopolyestern der Beispiele 3 bis 10 sowie der Vergleichsbeispiele 1 und 2 aufgeführt.

Tabelle 3: Prüfergebnisse von Lackfilmen basierend auf den erfindungsgemäßen Aminopolyestern der Beispiele 3 bis 10 sowie der Vergleichsbeispiele 1 und 2; Vernetzer: ®Desmodur N 3390

| Lack auf Basis des Polyesters aus Beispiel | | 1 | 2 | 3 | 4 | 5 | 6 | 7 | 8 | 9 | 10 |
|---|---|---|---|---|---|---|---|---|---|---|---|
| Pendelhärte nach König (s) | | 40 | 60 | 64 | 75 | 91 | 99 | 95 | 88 | 89 | 92 |
| Glanz nach Gardner, 60° C | | 88 | 85 | 86 | 88 | 87 | 89 | 90 | 86 | 87 | 84 |
| Anlösbarkeit 1) durch | Xylol | 1 | 1 | 1 | 1 | 0 | 0 | 0 | 0 | 0 | 0 |
| | MPA | 1 | 1 | 1 | 0 | 0 | 0 | 0 | 0 | 1 | 1 |
| Einwirkdauer: | Aceton | 1 | 1 | 1 | 1 | 1 | 1 | 1 | 1 | 1 | 1 |
| 1 Minute | Ethanol | 0 | 0 | 0 | 0 | 0 | 0 | 0 | 0 | 0 | 0 |
| Teerbeständigkeit 1) nach einer Einwirkungsdauer von | 1 h | 0 | 0 | 0 | 0 | 0 | 0 | 0 | 0 | 0 | 0 |
| | 3 h | 0-1 | 1 | 0 | 0 | 0 | 0 | 0 | 0 | 0 | 0 |
| Teerlösung: | 8 h | 1 | 1-2 | 0 | 0 | 0 | 0 | 0 | 0 | 0-1 | 1 |
| DBL 7399 2) | 24 h | 2 | 2-3 | 0-1 | 0-1 | 0 | 0 | 0 | 0-1 | 1 | 1-2 |
| Tieftemperaturflexibilität: Lackfilm gerissen bei (°C) | | -35 | -25 | -35 | -35 | -30 | -25 | -30 | -30 | -30 | -20 |

1) 0 bester Wert, 5 schlechtester Wert

2) Spezielle Teerlösung der Daimler Benz AG zur Ermittlung der Teerbeständigkeit von Automobillacken mit der Zusammensetzung:

30,5 Gew.-% ®Carbomasse EP KS (Fa. Rüttgerswerke AG)
62,0 Gew.-% ®Edenol D 81 (Fa. Henkel)
2,7 Gew.-% ®Santicizer 160 (Fa. Monsanto)
4,8 Gew.-% ®Palatinol O (Fa. BASF)

Diskussion der Resultate

Mit den Lacken auf Basis der Polyester der Beispiele 1 bis 10 können hochflexible Beschichtungen erzielt werden, wobei die Lacke der Beispiele 1, 3 und 4 die besten Werte hinsichtlich Elastizität erzielen.

Die Resultate der Teerbeständigkeitsprüfungen machen insbesondere die ganz ausgezeichnete Teerbeständigkeit der erfindungsgemäßen Lacke der Beispiele 3 bis 10 im Unterschied zu den Vergleichslacken 1 und 2 deutlich.

Beispiel 13 (Verwendung)

Der Aminopolyester (K) aus Beispiel 11 wurde mit dem Lackpolyisocyanat aus Beispiel 12 zu einem Klarlack formuliert und auf eine Glasplatte aufgetragen (Schichtdicke ca. 60 µm, trocken). Das Vernetzungsverhältnis sowie der Festkörpergehalt sind in Tabelle 4 angegeben. Nach den ebenfalls in Tabelle 4 aufgeführten Trocknungsbedingungen wurde die Lösungsmittelbeständigkeit mit der Wattbauschmethode geprüft. Die Bestimmung der Härte erfolgte nach der Bleistiftmethode.

Tabelle 4

| Klarlack aus dem erfindungsgemäßen Aminopolyester des Beispiels 11 Vernetzer: ®Desmodur N 3390, sowie Ergebnisse der Prüfungen der Lösungsmittelbeständigkeiten und Bleistifthärte | | |
|---|---|---|
| Beispiel | | 13 |
| Aminopolyester aus Bsp. 11 Vern.-Verh.NCO/NH + OH | | 1,2 |
| Lösungsmittel | | BuAc |
| Festgehalt (%) | | 50 |
| Trocknung | | 40'/80 °C + 1d RT |
| Anlösbarkeit[1)] durch Xylol | | 0 |
| Einwirkdauer MPA | | 0 |
| 1 Minute | Aceton<br>EtOH/$H_2O$ 1:1 | 1<br>1 |
| Bleistifthärte | | 3H |

[1)] 0 bester Wert, 5 schlechtester Wert

**Patentansprüche**

**1.** Verfahren zur Herstellung von Aminogruppen und ggf. Hydroxylgruppen aufweisenden Polyesterharzen mit einem Gehalt von Hydroxylgruppen von 0 bis 10 Gew.-% und einem Gehalt an Stickstoff (berechnet als N = 14) in Form von primären und/oder sekundären Aminogruppen von 0,01 bis 9 Gew.-%, dadurch gekennzeichnet, daß man ungesättigte, pro Molekül im statistischen Mittel insgesamt mindestens 2 Struktureinheiten der Formel

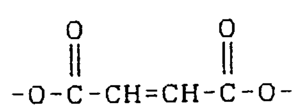

und ggf. alkoholische Hydroxylgruppen aufweisende Polyesterharze des Molekulargewichtsbereichs Mn 286 bis 10.000 bei 0 bis 120 °C mit Ammoniak oder primären Monoaminen der Formel

$R\text{-}NH_2$

im Sinne einer Additionsreaktion zur Reaktion bringt, wobei
R für einen gegebenenfalls Ethersauerstoffatome aufweisenden und/oder Hydroxylgruppen aufweisenden aliphatischen, cycloaliphatischen oder araliphatischen Rest steht.

**2.** Verfahren gemäß Anspruch 1, dadurch gekennzeichnet, daß man als ungesättigte Polyesterharze solche des Molekulargewichtsbereichs 488 bis 8.000 mit einem Hydroxylgruppengehalt von 0 bis 7 Gew.-% und einem mittleren Gehalt von insgesamt mindestens 3 Struktureinheiten der Formel

$$-O-\overset{\overset{O}{\|}}{C}-CH=CH-\overset{\overset{O}{\|}}{C}-O-$$

verwendet, die in an sich bekannter Weise durch Umsetzung von

a) einer Polycarbonsäure-Komponente, bestehend aus Maleinsäure, Maleinsäureanhydrid und/oder Fumarsäure sowie gegebenenfalls bis zu 95 Carboxyläquivalent-%, bezogen auf die Gesamtmenge der Komponente (a) an anderen Polycarbonsäuren des Molekulargewichtsbereichs 118 bis 1000 und/oder an Anhydriden derartiger Säuren

mit

b) einer Polyolkomponente einer (mittleren) maximalen Hydroxylfunktionalität von 3, bestehend aus mindestens einem mehrwertigen Alkohol des Molekulargewichtsbereichs 62 bis 400

gegebenenfalls unter Mitverwendung von

c) einer Monocarbonsäure-Komponente in einer Menge von bis zu 50 Carboxyläquivalent-%, bezogen auf die Gesamtmenge der Komponenten a) und c), bestehend aus mindestens einer Monocarbonsäure des Molekulargewichtsbereichs 60 bis 400 und/oder mindestens einem Anhydrid einer derartigen Monocarbonsäure,

und/oder ggf. unter Mitverwendung von

d) einer einwertigen Alkoholkomponente in einer Menge von bis zu 50 Hydroxyläquivalent-%, bezogen auf die Gesamtmenge der Komponenten b) und d), bestehend aus mindestens einem einwertigen Alkohol des Molekulargewichtsbereichs 32 bis 400

unter Einhaltung eines Äquivalentverhältnisses von Carboxylgruppen zu Hydroxylgruppen von 1:1,5 bis 1:1 bis zum Erreichen einer unter 10 mgKOH/g liegenden Säurezahl hergestellt worden sind.

**3.** Verfahren gemäß Anspruch 1 und 2, dadurch gekennzeichnet, daß man als Reaktionspartner für die ungesättigten Polyesterharze Ammoniak oder Amine der Formel

$R-NH_2$

verwendet, wobei

R für einen, gegebenenfalls mindestens eine alkoholische Hydroxylgruppe aufweisenden aliphatischen oder cycloaliphatischen Kohlenwasserstoffrest mit bis zu 15 Kohlenstoffatomen steht.

**4.** Verfahren gemäß Anspruch 1 bis 3, dadurch gekennzeichnet, daß man die Mengenverhältnisse der Reaktionspartner so wählt, daß auf jede Struktureinheit der Formel

$$-O-\overset{\overset{O}{\|}}{C}-CH=CH-\overset{\overset{O}{\|}}{C}-O-$$

0,1 bis 10 primäre Aminogruppen entfallen.

**5.** Gemäß Anspruch 1 bis 4 erhältliche, Aminogruppen und ggf. Hydroxylgruppen aufweisende Polyesterharze.

**6.** Verwendung der gemaß Anspruch 1 bis 4 erhältlichen, Amino- und ggf. Hydroxylgruppen aufweisenden Polyesterharze, ggf. zusammen mit anderen Verbindungen gegenüber Isocyanatgruppen reaktionsfähigen Gruppen als Bindemittelkomponente in Zweikomponenten-Polyurethanlacken.

**7.** Verwendung gemäß Anspruch 6 in Zweikomponenten-Polyurethanlacken zur Beschichtung von Kunststoffformteilen.

Europäisches Patentamt

EUROPÄISCHER RECHERCHENBERICHT

Nummer der Anmeldung
EP 93 12 0058

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | US-A-2 969 335 (J.K. SIMONS)<br>* Ansprüche 1,3 *<br>* Spalte 2, Zeile 49 - Spalte 3, Zeile 3 *<br>--- | 1-5 | C08G63/91<br>C08G18/46<br>C09D175/06<br>C08J7/04 |
| X | GB-A-1 017 001 (BAYER)<br>* Ansprüche 1-3 *<br>* Seite 1, Zeile 42 - Seite 2, Zeile 92 *<br>* Seite 3, Zeile 72 - Zeile 87 *<br>--- | 1-6 | |
| A | US-A-4 874 837 (J.P. BERSHAS ET AL.)<br>* Anspruch 1 *<br>* Spalte 4, Zeile 27 - Zeile 53 *<br>--- | 1 | |
| A | EP-A-0 271 385 (INSTITUT FRANCAIS DU PETROLE)<br>* Ansprüche 1,4 *<br>* Seite 3, Zeile 41 - Zeile 46 *<br>----- | 1 | |
| | | | **RECHERCHIERTE SACHGEBIETE (Int.Cl.5)** |
| | | | C08G<br>C08J |

Der vorliegende Recherchenbericht wurde für alle Patentansprüche erstellt

| Recherchenort | Abschlußdatum der Recherche | Prüfer |
|---|---|---|
| DEN HAAG | 14. April 1994 | Van Puymbroeck, M |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument